# EUROPEAN PATENT SPECIFICATION

(11) **EP 1 796 287 B1**
(45) Date of publication and mention of the grant of the patent: **16.11.2011**
(21) Application number: 05788151.8
(22) Date of filing: 27.09.2005
(51) Int. Cl.: H04B 7/08, H04N 5/44

(54) **WIRELESS RECEIVING APPARATUS**
DRAHTLOSE EMPFANGSVORRICHTUNG
APPAREIL DE RÉCEPTION SANS FIL

(30) Priority: 29.09.2004 JP 2004284753
(43) Date of publication of application: 13.06.2007
(73) Proprietor: Pioneer Corporation, Kanagawa 212-0031 (JP)
(72) Inventor: SUZUKI, Satoru, Kawagoe Koujou, Pioneer Corp., Kawagoe-shi, Saitama 3508555 (JP)
(74) Representative: Sajda, Wolf E.
(86) International application number: PCT/JP2005/017712
(87) International publication number: WO 2006/035753

(56) References cited:
- DE-A1- 19 743 123
- JP-A- 2 285 785
- JP-A- 8 107 378
- JP-A- 8 107 378
- JP-A- 8 205 038
- JP-A- 11 113 030
- JP-A- 2003 134 014
- US-A- 5 844 632

## Description

### Technical Field

The invention relates to a radio receiving set which performs a diversity reception.

### Background of the Invention

Traditionally, a radio receiving set mounted within an automobile vehicle or a cellular phone or the like has adopted a diversity receiving system provided with two or more antennas to receive broadcast waves from a relay station or a base station, to perform a reception by switching over to an antenna having a highest reception field intensity, thereby improving a reception quality by preventing a degradation caused due to a fading.

For example, as a receiving set adopting a conventional diversity receiving system, there has been known a vehicle television receiving set disclosed in Japanese Unexamined Patent Application Publication No. 2003-134014.

Such a conventional radio receiving set, as shown in Fig. 1 of the foregoing patent document, comprises: four antennas (10₁) - (10₄); an antenna selecting circuit (11); receiving means (12) for performing a turning reception, an AGC control, a detection or the like; an image level difference detecting circuit (13); a field intensity detecting circuit (14); a hysteresis circuit (15); and a table (16) serving as storage means. In this way, it is possible to detect and switch over to an antenna having a highest reception field intensity.

That is, the receiving means (12) receives respective reception signals generated in the antennas (10₁) - (10₄) through the antenna selecting circuit (11), generates respective intermediate frequency signals (IF signals) through a frequency conversion based on a turning reception, performs an AGC control and a detection or the like, thereby reproducing various video signals.

Then, the field intensity detecting circuit (14) detects respective reception intensities of the respective diversity antennas (10₁) - (10₄) in accordance with the levels of AGC control signals generated by the receiving means (12) during the foregoing AGC control. Further, the image level difference detecting circuit (13) detects pedestal levels (ALVL1)- (ALVL4) of the respective video signals, detects a largest pedestal level as a maximum value (ALVLMAX), and calculates respective level differences | ALVL1 - ALVLMAX | - | ALVL4 - ALVLMAX |.

Further, the hysteresis circuit (15) searches the table (16) for hysteresis values (AHIS) corresponding to respective reception field intensities (ALVL1)- (ALVL4), and applies a switchover control to the antenna selecting circuit (11) to switch over to a diversity antenna whose signal level is larger than the hysteresis values(AHIS) in view of level differences | ALVL1 - ALVLMAX | - | ALVL4 - ALVLMAX|.

Patent Document 1: Japanese Unexamined Patent Application Publication No. 2003-134014.

US 5 844 632 discloses a receiving apparatus having a plurality of antennas. During an antenna selection operation one of the antennas is selected such that each of the antennas is successively connected to a receiver for consecutive horizontal retrace periods.

JP 2003-134014 A discloses a diversity controller for an on vehicle television receiver. The receiver is composed of a plurality of antennas, an antenna selector circuit, a receiving means, an electric field strength detecting means and a control means.

### Disclosure of the Invention

### Problem(s) to be Solved by the Invention

However, as in the above-described vehicle television receiving set, regarding a conventional radio receiving set which detects the levels of AGC control signal and video signal, detects and switches over to an antenna capable of obtaining a highest reception field intensity only in accordance with level detection results, it is sometimes difficult to highly accurately detect an antenna capable of improving a reception quality under a weak electric field, thus resulting in a low reception quality.

Namely, under a weak electric field in which all diversity antennas suffer low reception field intensities, once the receiving means (12) performs an AGC control and a detection or the like, an S/N ratio of AGC control signal and video signal will become worse. As a result, even if a radio receiving set tries to detect an antenna capable of obtaining a highest reception field intensity only in accordance with the levels of AGC control signal and video signal, it is impossible to detect such an antenna with a high precision. Consequently, an unstable condition will occur in which antenna switchover is unnecessarily repeated, resulting in a low reception quality.

The present invention has been accomplished in view of the above-discussed conventional problems and it is an object of the present invention to provide a radio receiving set capable of realizing a highly stable diversity reception even under a weak electric field, thereby preventing a deterioration in a reception quality.

It is another object of the present invention to provide a radio receiving set which receives analogue television broadcast, ensures a highly stable diversity reception even under a weak electric field, thereby preventing a deterioration in a reception quality.

It is further object of the present invention to provide a radio receiving set which receives ground digital broadcast, ensures a highly stable diversity reception even under a weak electric field, thereby preventing a deterioration in a reception quality.

### Means for Solving the Problem(s)

The invention comprises a radio receiving set according to claim 1. The subject matter of claim 2 describes an embodiment of the invention.

The claimed invention can be better understood in view of the embodiments described hereinafter. In general, the described embodiments describe preferred embodiments of the invention. The attentive reader will note, however, that some aspects of the described embodiments extend beyond the scope of the claims. To the . respect that the described embodiments indeed extend beyond the scope of the claims, the described embodiments are to be considered supplementary background information and do not constitute definitions of the invention per se. This also holds for the subsequent brief description of the drawings as well as the description of the embodiments.

### Brief Description of the Drawings

Fig. 1 is a block diagram showing the composition of a radio receiving set which receives analogue television broadcast, according to a first embodiment of the present invention.
Fig. 2 is a block diagram showing the composition of a radio receiving set which receives ground digital broadcast, according to an example of the present invention.
Fig. 3 is a block diagram representing a radio receiving set shown in Fig. 1, indicating in more detail the composition of the receiving set.
Fig. 4 is a timing chart explaining an operation of the radio receiving set shown in Fig. 3.
Fig. 5 is a block diagram representing a radio receiving set shown in Fig. 2, indicating in more detail the composition of the receiving set.
Fig. 6 is a timing chart explaining an operation of the radio receiving set shown in Fig. 5.

### [Best Mode of Carrying Out the Invention]

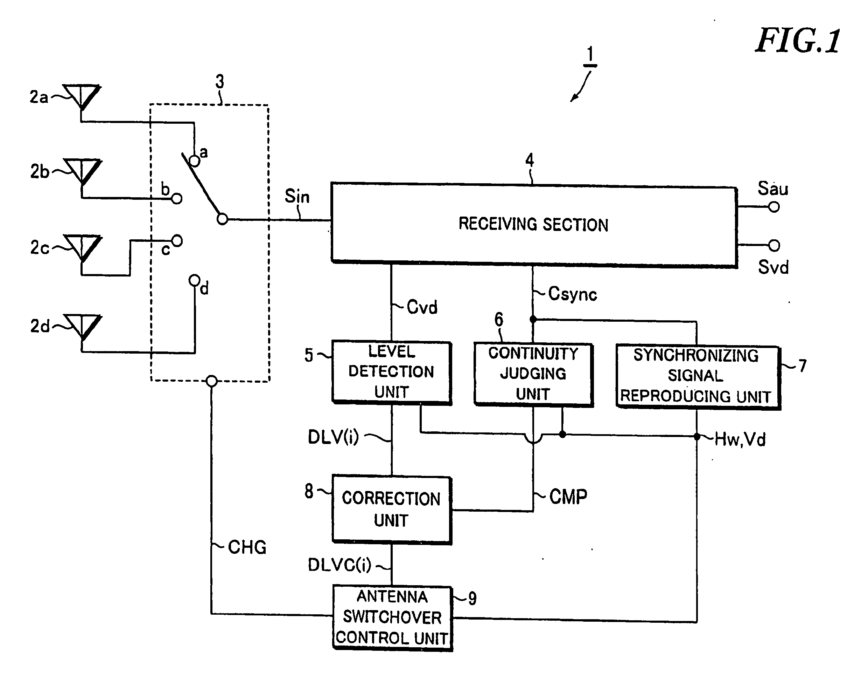

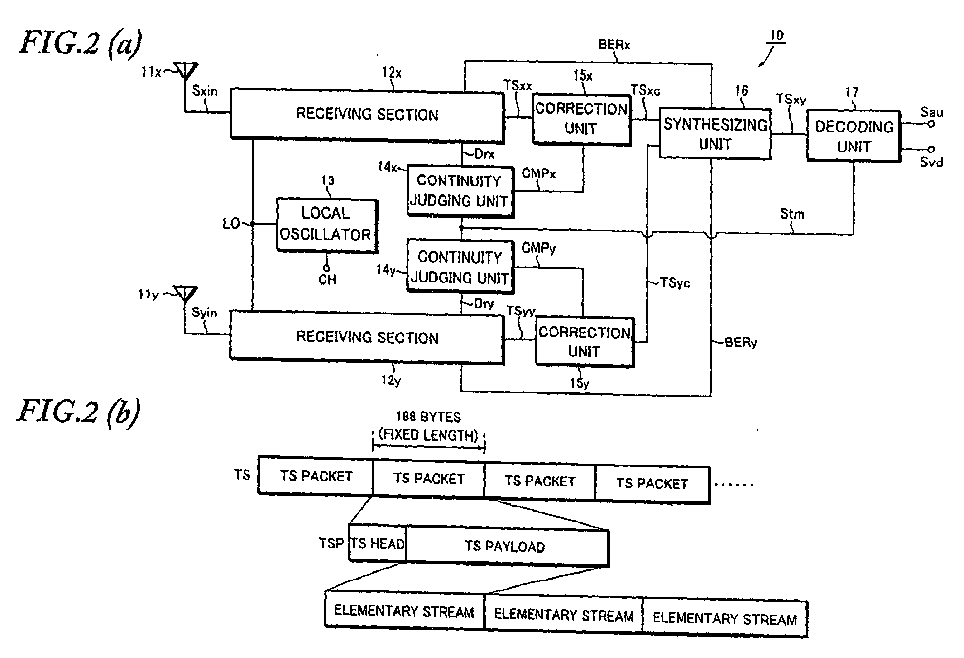

Embodiments of the present invention will be described with reference to Fig.1. Fig. 1 is a block diagram showing the composition of a radio receiving set which receives analogue television broadcast, serving as a first embodiment of the present invention. Fig. 2 is a block diagram showing the composition of a radio receiving set which receives ground digital broadcast, serving as an example of the present invention. In the following, description will be given to a radio receiving set based on the first embodiment.

### First Embodiment

As shown in Fig. 1, the radio receiving set 1 of the present invention comprises: an antenna selecting section 3 connected with a plurality of diversity antennas 2a, 2b, 2c, and 2d (the present embodiment contains four such antennas); a receiving section 4 which receives a reception signal Sin from any one diversity antenna selected by the antenna selecting section 3; a level detecting unit 5; a continuity judging unit 6; a synchronizing signal reproducing unit 7; a correction unit 8; an antenna switchover control unit 9.

The antenna selecting section 3 connects one of the four diversity antennas 2a-2d, with the receiving section 4 in accordance with an antenna switchover control signal CHG which will be discussed later.

In order to receive an analog television broadcast selected by a user, the receiving section 4 mixes the reception signal Sin with so-called local oscillation signal to generate an intermediate frequency signal (IF signal), applies a detection processing to the IF signal to generate a composite video signal Cvd and a composite synchronizing signal Csync, followed by applying a demodulation processing to the composite video signal Cvd, thereby generating and outputting an audio signal Sau to a speaker or the like, and a video signal to a display or the like.

The level detecting unit 5 detects a pedestal level generated in synchronism with vertical blanking period, from among the composite video signals Cvd generated in the receiving section 4. The detection result is A/D-converted into a level detection signal DLV(i) consisting of N-bit (the present embodiment involves 8 bits) binary data, and then supplied to the correction unit 8. Furthermore, in synchronism with a below-mentioned vertical synchronizing signal Vd supplied from the synchronizing signal reproducing unit 7, the level detecting unit 5 detects a pedestal level generated in synchronism with the above-mentioned vertical blanking period.

However, for the purpose of an easy description, when the antenna selecting section 3 switches over to contact points a, b, c, and d of the diversity antennas 2a, 2b, 2c and 2d, the respective level detection signals DLV(i) outputted from the level detecting unit 5 will be represented by DLV(a), DLV(b), DLV(c), and DLV(d), while a general term for the respective level detection signals DLV(a), DLV(b), DLV(c), and DLV(d) will be expressed by DLV(i).

The correction unit 8 performs a correcting process to remove an instability occurred in level detection signal DLV(i) during a reception under a weak electric field, in accordance with an instruction specified by a below-mentioned correction control signal CMP supplied from the continuity judging unit 6, thereby outputting a corrected signal DLVC(i) (hereinafter, referred to as "correction detection signal").

As a more detailed correction processing method, the correction unit 8 of the present embodiment operates in accordance with an instruction specified by a correction control signal CMP to compulsorily set a least significant bit of a level detection signal DLV(i) to "0" and then output the same, or output the level detection signal DLV(i) without performing any processing.

Namely, once an instruction (hereinafter, referred to as "correction instruction") for correcting a level detection signal DLV(i) is issued by virtue of a correction control signal CMP, the correction unit 8 will compulsorily set a less significant bit of the level detection signal DLV(i), e.g., only the least significant bit thereof to "0", thereby outputting a correction detection signal DLVC(i) not having an instability with respect to the level detection signal DLV(i). That is, when a level detection signal DLV(i) expressed for example as "00000111" has been supplied from the level detecting unit 5, if "correction instruction" has been issued by virtue of a correction control signal CMP, the correction unit 8 of the present embodiment will generate and thus output a correction detection signal DLVC(i) having a decreased gradation expressed as "00000110", thereby correcting an instability in the level detection signal DLV(i).

On the other hand, if "correction instruction" is not issued by virtue of a correction control signal CMP, the correction unit 8 will output the level detection signal DLV(i) as a correction detection signal DLVC(i) without performing any processing. Namely, when a level detection signal DLV(i) expressed for example as "00000111" has been supplied from the level detecting unit 5, if "correction instruction" has not been issued by virtue of a correction control signal CMP, the correction unit 8 will output a correction detection signal DLVC(i) expressed as "00000110".

The antenna switchover control unit 9 supplies an antenna switchover control signal CHG to the antenna selecting section 3, in synchronism with a below-mentioned vertical synchronizing signal Vd supplied from the synchronizing signal reproducing unit 7 during a period from a vertical blanking period to an initial horizontal scanning period, thereby switching over to a diversity antenna capable of obtaining a best reception quality.

That is, the antenna switchover control unit 9 applies a switchover control to the antenna selecting section 3 by virtue of an antenna switchover control signal CHG, so as to connect the receiving section 4 with the respective diversity antennas 2a, 2b, 2c, and 2d. In this way, level detection signals DLV(a), DLV(b), DLV(c), and DLV(d) are outputted from the level detecting unit 5, while the correction detection signals DLVC(a), DLVC(b), and DLVC(c) and DLVC(d) are outputted from the correction unit 8. Next, the antenna switchover control unit 9 detects a maximum value among the correction detection signals DLVC(a), DLVC(b), DLVC(c) and DLVC(d), determining that a diversity antenna having the maximum value is one capable of ensuring a best reception quality. Then, a further changeover control is performed on the antenna selecting section 3 by virtue of the antenna switchover control signal CHG so as to connect the determined diversity antenna with the receiving section 4.

For example, when the diversity antenna having the above-mentioned maximum value is a diversity antenna 2a, the antenna selecting section 3 will operate to connect the diversity antenna 2a with the receiving section 4.

The synchronizing signal reproducing unit 7 receives a composite synchronizing signal Csync generated by using the receiving section 4 to apply a synchronizing separation to the composite video signal Cvd and outputted from the receiving section 4, thereby detecting a horizontal synchronizing signal component and a vertical synchronizing signal component contained in the composite synchronizing signal Csync. Then, the synchronizing signal reproducing unit 7 generates a horizontal synchronizing signal Hw which is in synchronism with the detected horizontal synchronizing signal component and has a predetermined horizontal synchronizing frequency (a frequency of about 15.73 kHz in a case of NTSC color TV system) which satisfies the standard of analog television broadcast, and a vertical synchronizing signal Vd which is in synchronism with the detected vertical synchronizing signal component and has a predetermined vertical synchronizing frequency (a frequency of about 60 Hz in a case of an NTSC color TV system) which satisfies the standard of analog television broadcast.

The continuity judging unit 6 performs a processing for detecting a horizontal synchronizing signal component from the composite synchronizing signal Csync in synchronism with the horizontal synchronizing signal Hw. Then, the continuity judging unit 6 operates to investigate whether the foregoing detection processing is capable of detecting a horizontal synchronizing signal component, whether a continuous detection of a horizontal synchronizing signal component was possible, and whether a continuity has occurred at a predetermined frequency when the continuous detection was possible, thereby determining whether the reception is under a low electric field. If it is determined that a reception is not under a low electric field, the continuity judging unit 6 will output a correction control signal CMP not performing "correction instruction" to the correction unit 8. On the other hand, if it is determined that a reception is under a low electric field, the continuity judging unit 6 will output a correction control signal CMP indicating "correction instruction" to the correction unit 8.

In more detail, the continuity judging unit 6 operates to investigate whether the following conditions have been satisfied within the respective vertical scanning periods (namely, 1V periods) of the vertical synchronizing signal Vd. These conditions include "coincidence" on a time axis between a horizontal synchronizing signal component and a horizontal synchronizing signal Hw, "continuity within horizontal scanning periods" and "frequency of continuity within horizontal scanning periods" (hereinafter, referred to as "conditions in horizontal scanning periods"). The continuity judging unit 6 further investigates whether the above 1V periods Tv satisfying "conditions in horizontal scanning periods" have been continued for a predetermined times k (hereinafter, referred to as "conditions in vertical scanning periods"). Then, if both of "conditions in horizontal scanning periods" and "conditions in vertical scanning periods" have been satisfied, it will be judged that an electric filed at this time is not a low electric filed. On the other hand, if even one of the above two conditions is not satisfied, it will be judged that an electric filed at this time is a low electric filed, thereby outputting correction control signals CMP in response to respective judgment results.

Here, the above-mentioned "coincidence" means whether a horizontal synchronizing signal component was detected at a time at which a horizontal synchronizing signal Hw occurs during a level blanking period of each 1H period (horizontal scanning period) Th. Therefore, when a horizontal synchronizing signal component was detected at a time at which the horizontal synchronizing signal Hw occurs, the continuity judging unit 6 will judge that "coincidence" has been acquired. On the other hand, if a horizontal synchronizing signal component was not detected at a time at which the horizontal synchronizing signal Hw occurs, the continuity judging unit 6 will judge that "coincidence" has not been acquired.

The above-mentioned "continuity" means whether a horizontal synchronizing signal component having a "coincidence" with a horizontal synchronizing signal Hw was continuously detected through a predetermined number of times n (the present embodiment involves three times). If a horizontal synchronizing signal component having a "coincidence" with a horizontal synchronizing signal Hw was continuously detected through a period which is at least n times the foregoing I H period Th (namely, nH period), the continuity judging unit 6 will judge that "continuity" has been acquired. On the other hand, if a horizontal synchronizing signal component having a "coincidence" with a horizontal synchronizing signal Hw has been continued during a period which is less than n times the foregoing 1H period (namely, shorter than nH period), the continuity judging unit 6 will judge that "continuity" has not been acquired.

The above-mentioned "frequency of continuity" means the number of times during which a state having the "continuity" occurs within the foregoing 1V period Tv. In fact, the continuity judging unit 6 counts the number of times during which a state having the "continuity" occurs within the foregoing 1V period Tv. If the counted number of times m is equal to or larger than a predetermined number of times u (the present embodiment involves 63 times), the continuity judging unit 6 will judge that "frequency of continuity" is high. On the other hand, if a state having the "continuity" occurs within the foregoing 1V period Tv at a number of times which is less than u, the continuity judging unit 6 will judge that "frequency of continuity" is low.

In this way, the continuity judging unit 6 can investigate "coincidence", "continuity" and "frequency of continuity". When there is no "coincidence" or "continuity" or when "frequency of continuity" is low, the continuity judging unit 6 will judge that "conditions in horizontal scanning periods" have not been satisfied. On the other hand, if "coincidence" and "continuity" have been acquired and "frequency of continuity" is high, the continuity judging unit 6 will judge that "conditions in horizontal scanning periods" have been satisfied.

Next, the above-mentioned "conditions in vertical scanning periods" means that the 1V period Tv satisfying "the conditions in horizontal scanning periods" continues for a predetermined number of times k. Once the continuity judging unit 6 detects that the 1V period Tv satisfying "the conditions in horizontal scanning periods" has continued for a predetermined number of times k (namely, kV period), the continuity judging unit 6 will judge that "conditions in vertical scanning periods" have been satisfied. Then, once it is determined that "conditions in horizontal scanning periods" and "conditions in vertical scanning periods" have been satisfied, it will be determined that an electric field at this time is not a low electric field. On the other hand, even if only one of the above two conditions has not been satisfied, it will be determined that an electric field at this time is a low electric field, thereby outputting correction control signals CMP in response to various judgment results.

Furthermore, the continuity judging unit 6 completes judging whether "conditions in vertical scanning periods" have been satisfied in vertical blanking periods. Then, during next 1V period Tv, the continuity judging unit 6 outputs a correction control signal CMP performing "correction instruction" or a correction control signal CMP not performing "correction instruction" in response to a judgment result.

As explained above, in the radio receiving set 1 of the present embodiment, the continuity judging unit 6 operates to investigate whether "conditions in horizontal scanning periods" and "conditions in vertical scanning periods" have been satisfied with respect to horizontal synchronizing signal component of a composite synchronizing signal Csync, thereby judging whether the horizontal synchronizing signal component has been continuously demodulated at a high frequency. If it is determined that the horizontal synchronizing signal component has been continuously demodulated at a high frequency, it will be determined that an electric filed at this time is not a low electric field. Therefore, unlike a judgment to judge whether a reception is being performed under a low electric field simply by investigating the level of a horizontal synchronizing signal component, it is possible to more accurately judge whether a reception is being performed under a low electric field.

Furthermore, the continuity judging unit 6 supplies to the correction unit 8 a correction control signal CMP responding to a judgment result indicating whether an electric filed at this time is a low electric filed. If it is not a low electric field, the correction unit 8 will supply the level detection signals DLV(a), DLV(b), DLV(c), and DLV(d) fed from the level detecting unit 5 as correction detection signals DLVC(a), DLVC(b), DLVC(c), and DLVC(d), to the antenna switchover control unit 9, without carrying out any processing. On the other hand, if it is a low electric field, the correction unit 8 will compulsorily set the least significant bits of the level detection signals DLV(a), DLV(b), DLV(c), and DLV(d) to "0", and supply the correction detection signals DLVC(a), DLVC(b), and DLVC(c) and DLVC(d) to the antenna switchover control unit 9, thereby effecting a control for carrying out a switchover among the diversity antennas 2a - 2d.

Namely, when a reception is being performed under a low electric field, the value of the least significant bits of the level detection signals DLV(a), DLV(b), DLV(c), and DLV(d) outputted from the level detecting unit 5 will become unstable and thus not reliable. As a result, even if the antenna switchover control unit 9 performs a comparison among the level detection signals DLV(a), DLV(b), DLV(c), and DLV(d) and then selects a diversity antenna corresponding to a level detection signal having a maximum value, it is still impossible to perform a selection with an acceptable precision. In view of this, the present embodiment compulsorily changes an unstable and unreliable least significant bit into "0", so as to supply the correction detection signals DLVC(a), DLVC(b), DLVC(c), and DLVC(d)free from any instability to the antenna switchover control unit 9, while the antenna switchover control unit 9 performs a comparison among the level detection signals DLV(a), DLV(b), DLV(c), and DLV(d) and then selects a diversity antenna corresponding to a correction detection signal having a maximum value, thereby rendering it possible to high accurately and safely select a diversity antenna capable of obtaining a best reception quality. In this way, a switchover of a diversity antenna under a low electric filed will not become unstable, thereby making it possible to obtain an improved reception quality.

As described above, the least significant bits of the level detection signals DLV(a), DLV(b), DLV(c) and DLV(d) are compulsorily changed into "0" so as to generate the correction detection signals DLVC(a), DLVC(b), and DLVC(c) and DLVC(d) free from any instability. However, it is also possible for the least significant bits to be compulsorily changed into "1", or for a plurality of bits arranging from the least significant bit to be changed in accordance with predetermined binary data. Namely, the significant bit plus one or more bits which are not stable under a low electric field are determined in advance and then changed by virtue of predetermined binary data.

Moreover, according to the present embodiment, in response to judgment result of the continuity judging unit 6, i.e., in response to whether there is a "correction instruction", the correction unit 8 operates to replace the predetermined bits of the level detection signals DLV(a), DLV(b), DLV(c), and DLV(d) with other bit data, thereby removing an instability when a reception is performed under a low electric filed. However, the present invention should not be limited to the foregoing technique of replacing predetermined bits with other bit data, but is also possible to utilize other technique of removing an instability from a level detection signal.

Further, the present embodiment operates to judge whether a horizontal synchronizing signal component has been continuously demodulated with a timely high frequency, i.e., to judge whether a reception quality is in an acceptable state. However, it is also possible to perform an adverse judgment, i.e., to judge whether a state in which a horizontal synchronizing signal component is not modulated is being continued with a timely high frequency, thereby judging that a reception quality is in a bad state.

In other words, it is also possible to perform the following processing. Namely, the continuity judging unit 6 operates to judge that an electric field is a low electric field if a state in which a horizontal synchronizing signal component is not modulated is being continued with a timely high frequency, and supplies a correction control signal CMP indicating "correction instruction" to correction unit 8. Alternatively, the continuity judging unit 6 operates to judge that an electric field is not a low electric field if a state in which a horizontal synchronizing signal component is not modulated is not being continued with a timely high frequency, and supplies a correction control signal CMP not performing "correction instruction" to correction unit 8.

Moreover, the present invention should not be limited to an embodiment of detecting the foregoing continuity in accordance with a horizontal synchronizing signal component or a vertical synchronizing signal component. In fact, it is also possible to judge the foregoing continuity in accordance with other components of demodulated signals.

### Example

Next, description will be given to explain a radio receiving set which receives ground digital broadcast with reference to Fig. 2. Fig. 2(a) is a block diagram showing the composition of the radio receiving set of the present embodiment, and Fig. 2(b) is a chart schematically showing the composition of TS (Transport Stream) prescribed by a multiplex coding system (MPEG-2 system) adopted in ground digital broadcast.

As shown in Fig. 2(a), the radio receiving set 10 comprises: two systems of receiving sections 12x and 12y connected with a plurality of diversity antennas 11x and 11y (the present embodiment involves two diversity antennas); a local oscillator 13 which supplies the same local oscillation signals LO to the receiving sections 12x and 12y; continuity judging units 14x and 14y; correction units 15x and 15y; synthesizing unit 16; decoding unit 17.

The local oscillator 13 generates local oscillation signal LO having a tuning frequency corresponding to a broadcast channel CH specified by a user, and supplies the same to the receiving sections 12x and 12y.

The receiving section 12x mixes the local oscillation signal LO with a reception signal Sxin generated in the diversity antenna 11x, thereby producing an intermediate frequency signal (IF signal) and further A/D-converting the IF signal into digital data. Subsequently, the receiving section 12x performs various processings such as synchronization processing, FFT (Fast Fourier Transform), demodulation processing, error correction processing, thereby generating and thus outputting a transport stream TSxx having a structure shown in Fig. 2(b).

Similarly, the receiving section 12y mixes the local oscillation signal LO with a reception signal Syin generated in the diversity antenna 11y, thereby producing an intermediate frequency signal (IF signal) and further A/D-converting the IF signal into digital data. Subsequently, the receiving section 12y performs various processings such as synchronization processing, FFT (Fast Fourier Transform), demodulation processing, error correction processing, thereby generating and thus outputting a transport stream TSyy having a structure shown in Fig. 2(b).

Namely, as shown in Fig. 2(b), the transport streams TSxx and TSyy are formed as a collection of 188 bytes of transport stream packets (TS packets) TSP, with each TS packet TSP including a transport stream header (TS header) and a transport stream payload (TS payload), with TS payload including elementary streams. Further, elementary streams contain video data and audio data in byte unit and transmitted from broadcast station.

The continuity judging unit 14x inputs into it correction number data Drx which will be outputted when the receiving section 12x performs the foregoing error correction processing. Namely, when the receiving section 12x performs an error correction processing based on Viterbi decoding or Reed Solomon decoding in TS packet unit to generate the transport stream TSxx, the correction number data Drx will be outputted indicating the number of bytes corrected with respect to the foregoing video data and audio data, and will be inputted into the continuity judging unit 14x.

Furthermore, when the continuity judging unit 14x indicates that the correction number data Drx outputted in TS packet unit from the receiving section 12x has been corrected for a predetermined number of bytes r (the present example involves 5) and detects that a predetermined number of TS packets (the present example involves 3) have been continued, an error detection signal Exd will internally occur. Furthermore, within a period of inputting the correction number data Drx with respect to a predetermined number T of continued TS packets (the present example involves 256), the number of times p at which error detection signals Exd occur are counted. When such number of times have reached or exceeded a predetermined number of times q (the present example involves 31), an instability detection signal Exus will be internally generated. Further, when an instability detection signal Exus has continuously occurred for a predetermined number of times h (the present example involves 3), a correction control signal CMPx indicating "correction instruction" will be supplied to the correction unit 15x during a next period in which T number of TS packets would occur.

Namely, when the receiving section 12x applies an error correction to a predetermined number of bytes with respect to the respective TS packets and when such correction processing has been carried out for a number of times s, the continuity judging unit 14x will generate an error detection signal Exd. Furthermore, during a period in which the receiving section 12x applies an error correction to a predetermined number T of continued TS packets, the continuity judging unit 14x will count a number of times p at which error detection signals Exd have occurred. When the number of occurrences p have reached or exceeded a predetermined number of times q, an instability detection signal Exus will be generated. Further, when an instability detection signal Exus is to be continuously generated for a predetermined number of times h, the continuity judging unit 14x will operate within a period containing next T TS packets so as to output a correction control signal CMPx indicating "correction instruction" for performing a below-mentioned correction to the correction unit 15x.

In this way, the continuity judging unit 14x operates to investigate the correction number data Drx so as to judge the number of bytes within error-corrected TS packets, a continuity of the error-corrected TS packets, and a frequency of the continuity within a period containing a predetermined number of TS packets. If a state in which the foregoing frequency is high has happened continuously for a predetermined number of times h, it will be judged that a reception at this time is performed under a low electric field, thereby outputting a correction control signal CMPx indicating "correction instruction". On the other hand, if a state in which the foregoing frequency is high has not happened continuously for a predetermined number of times h, it will be judged that a reception at this time is not performed under a low electric field, thereby outputting a correction control signal CMPx not performing "correction instruction".

The correction unit 15x operates during a period of supplying a correction control signal CMPx indicating "correction instruction", to apply a correction processing (which compulsorily makes the data of the least significant bit to be "0") to TS payloads (more specifically, elementary streams) in TS packets outputted from the receiving section 12x, thereby removing an unfavorable influence based on a low electric field. For example, by compulsorily making the least significant bit to be "0", the gradation of the audio data or video data in TS payloads will be reduced. On the other hand, during a period of supplying a correction control signal CMPx not performing "correction instruction", a correction processing (which compulsorily makes the data of the least significant bit to be "0") will not be applied to TS payloads in TS packets outputted from the receiving section 12x, thereby outputting the data without any processing.

Therefore, the correction unit 15x operates in accordance with a correction control signal CMPx, to output a transport stream TSxc consisting of a series of periods including only TS packets processed in correction and periods including only TS packets not processed in correction.

The continuity judging unit 14y performs the same processing as the continuity judging unit 14x and outputs a correction control signal CMPy, while the correction unit 15y also operates in accordance with the correction control signal CMPy and performs the same correction processing as the correction unit 15x, thereby outputting a transport stream TSyc consisting of a series of periods including only TS packets processed in correction and periods including only TS packets not processed in correction.

Namely, when the continuity judging unit 14y indicates that the correction number data Dry outputted in TS packet unit from the receiving section 12y have been corrected for a predetermined number of bytes r (the present example involves 5 bytes) and detects that a predetermined number s (the present example involves 3) of TS packets have been continued, an error detection signal Eyd will be internally generated. Further, within a period of inputting the correction number data Dry with respect to a predetermined number T (the present example involves 256) of continued TS packets, the number of occurrences p of error detection signal Eyd is counted. When the number of occurrences p has reached or exceeded a predetermined number of times q (the present example involves 31), an instability detection signal Eyus will be generated internally. Moreover, when the instability detection signal Eyus has occurred continuously for a predetermined number of times h (the present example involves 3), the correction control signal CMPy indicating "correction instruction" will be supplied to the correction unit 15y during a period containing a next number T of TS packets. On the other hand, when the foregoing occurrence frequency is low (in other words, when a state in which the occurrence frequency is high has not reached the predetermined number of times h), the continuity judging unit 14y will output a correction control signal CMPy not performing "correction instruction".

Then, the correction unit 15y operates during a period of supplying a correction control signal CMPy indicating "correction instruction" to apply a correction processing (which compulsorily makes the data of the least significant bit to be "0") to TS payloads (more specifically, elementary streams) in TS packets outputted from the receiving section 12x. On the other hand, during a period of supplying a correction control signal CMPy not performing "correction instruction", a correction processing (which compulsorily makes the data of the least significant bit to be "0") will not be applied to TS payloads in TS packets outputted from the receiving section 12y, thereby outputting the data without any processing.

The synthesizing unit 16 inputs into it transport streams TSxc and TSyc, data BERx indicating an error rate outputted when the receiving section 12x performs the above-mentioned error correction, and data BERy indicating an error rate outputted when the receiving section 12y performs the above-mentioned error correction. Then, the data BERx and the data BERy are compared with each other. When the data BERx exhibits a better reception quality, TS packet of the transport stream TSxc will be outputted. On the other hand, when the data BERy shows a better reception quality, TS packet of the transport stream TSyc will be outputted.

Namely, the synthesizing unit 16 operates in accordance with the Data BERx and the data BERy to effect a switchover among the transport streams TSxc and TSyc as well as the respective TS packets, thereby generating and thus outputting the transport stream TSxy capable of obtaining an improved reception quality.

The decoding unit 17 receives the transport stream TSxy and performs a decoding process based on a predetermined audio coding method (MPEG-2 Audio) and a predetermined video coding method (MPEG-2 Video), thereby reproducing and outputting the audio signal Sau and video signal Svd which have been sent from a broadcast station.

Furthermore, the decoding unit 17 detects clock information data called PCR (Program Clock Reference) which will be contained in the transport stream TSxy and sent hereto in order to adjust the basic clock of the radio receiving set 10 to the broadcast station, generates a timing signal Stm adjusted to the clock information data and supplies the same to the continuity judging units 14x and 14y. In this way, the continuity judging units 14x and 14y can input into them the correction number data Drx and Dry of each TS packet in synchronism with the timing signal Stm.

According to the radio receiving set 10 of the present example described above, the continuity judging units 14x and 14y operates to investigate the clock information data Drx and Dry so as to judge the number of bytes within error-corrected TS packets, a continuity of the error-corrected TS packets, and a frequency of the continuity within a period containing a predetermined number of TS packets. If a state in which the foregoing frequency is high has happened continuously for a predetermined number of times h, it will be judged that a reception at this time is performed under a low electric field. In this way, different from a method in which whether a reception is performed under a low electric field is judged only by investigating the level of IF signals generated in the receiving sections 12x and 12y, such a judgment can be carried out with a further higher precision.

Then, once the continuity judging units 14x and 14y judge that a reception is performed under a low electric field, they will output the correction control signals CMPx and CMPy indicating "correction instruction", while the correction units 15x and 15y will operate in accordance with the instructions of the correction control signals CMPx and CMPy to apply a correction processing to the transport streams TSxc and TSyc. In this way, it is possible to compulsorily change into "0" the least significant bits of video data and audio data which will be unstable when a reception is performed under a low electric field, output transport streams TSxx and TSyy free from any instability to the synthesizing unit 16, and cause the decoding unit 17 to decode a TS packet having a better reception quality based on an error rate from among the transport streams TSxc and TSyc. Accordingly, even when a reception is performed under a low electric field, it is still possible to reproduce a high quality audio signal Sau and a high quality video signal Svd, in accordance with a broadcast wave received by a diversity antenna capable of obtaining a better reception quality, selected from among the diversity antennas 11x and 11y.

In the present example when applying a correction processing to the transport streams TSxx and TSyy, it is required to compulsorily change into "0" (i.e. replacement) the least significant bits of video data and audio data which will be unstable when a reception is performed under a low electric field, thereby outputting transport streams TSxx and TSyy free from any instability. However, it is also possible to compulsorily change the least significant bits into "1" or to change a plurality of bits starting from the least significant bit in accordance with predetermined binary data. That is, one or more bits starting from the least significant bit which will be unstable under a low electric field, are determined in advance and changed in accordance with predetermined binary data.

Here, as a technique for generating transport streams TSxc and TSyc free from any instability, the present invention should not be limited to the foregoing process of replacing the transport streams TSxc and TSyc with other bit data. In fact, it is also possible to utilize other technique for removing instability.

In addition, the present example requires to judge whether a frequently error-corrected TS packet has occurred continuously at a timely high frequency, i.e., to judge whether a reception at this time is in a bad state. However, it is also possible to perform a judgment in an adverse process, i.e., to judge whether a less frequently error-corrected TS packet has occurred continuously at a timely high frequency, i.e., to judge whether a reception at this time is in an acceptable state.

Namely, if the continuity judging units 14x and 14y have judged that a less frequently error-corrected TS packet has occurred continuously at a timely high frequency, an electric field at this time will not be determined to be a low electric field. On the other hand, if it is judged that a less frequently error-corrected TS packet has not occurred continuously at a timely high frequency, an electric field at this time will be determined to be a low electric field, thereby supplying a correction control signal CMP indicating "correction instruction" to the correction unit 8.

### Example 1

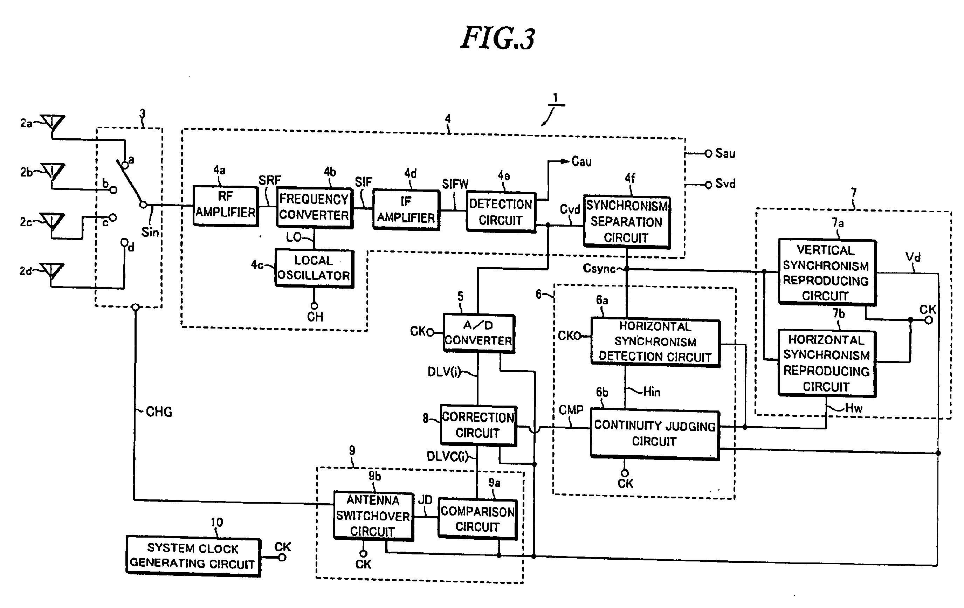

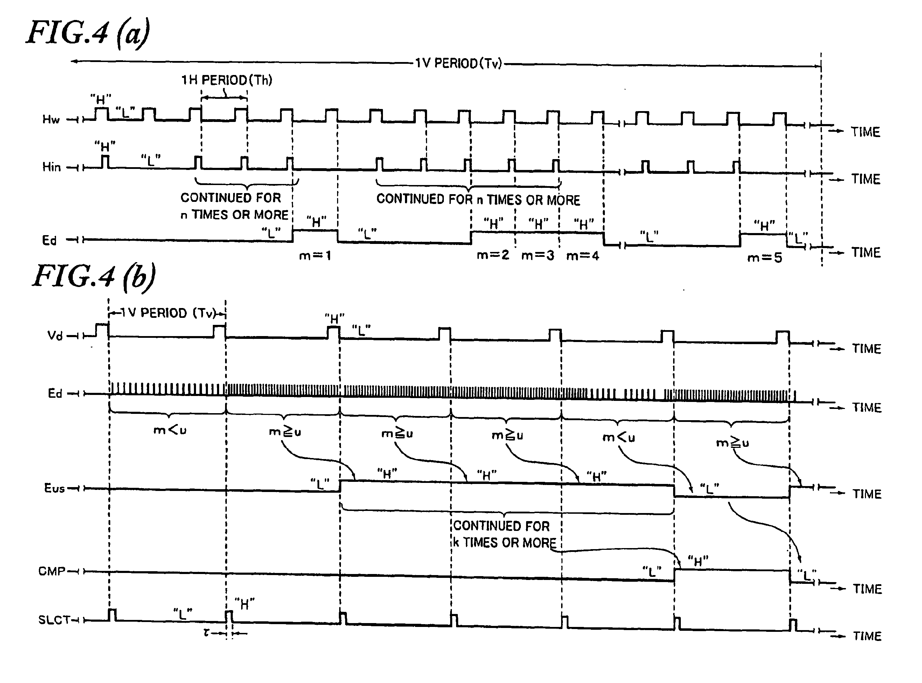

Next, description will be given to explain the radio receiving set according to an example based on the embodiment shown in Fig. 1, with reference to Fig. 3 and Fig. 4. Fig. 3 is a block diagram showing the composition of the radio receiving set formed according to the embodiment with the elements which are the same as or equivalent to those in Fig. 1 being represented by the same reference numerals. Fig. 4 is a timing chart for explaining an operation of the radio receiving set formed according to the embodiment.

As shown in Fig. 3, the radio receiving set 1, which is similar to the radio receiving set 1 shown in Fig. 1, comprises: an antenna selecting section 3 connected with four diversity antennas 2a, 2b, 2c, and 2d; a receiving section 4 which receives a reception signal Sin from any one diversity antenna selected by the antenna selecting section 3; an A/D converter 5 serving as a level detecting unit 5; a continuity judging unit 6; a synchronizing signal reproducing section 7; a correction circuit 8 serving as a correction unit; an antenna switchover control unit 9. The radio receiving set 1 also has a system clock generating circuit 10 which generates a system clock CK for carrying out synchronous operation of the radio receiving set 1 as a whole.

Here, the receiving section 4 comprises: an RF amplifying unit 4a which amplifies a high frequency reception signal Sin and outputs RF signal SRF; a local oscillator 4c which outputs a local oscillation signal LO having a turned frequency corresponding to a broadcast channel CH specified by a user; a frequency conversion unit 4b which mixes together the RF signal SRF and the local oscillation signal LO to generate and thus output an intermediate frequency signal (IF signal) SIF; an IF amplifier unit 4d which amplifies the IF signal SIF and band-limits the same to a predetermined frequency band, thereby outputting an IF signal SIFW as so-called desired wave; a detecting circuit 4e which detects the IF signal SIFW to generate a composite video signal Cvd; a synchronism separating circuit 4f which separates a composite synchronizing signal Csync from the composite video signal Cvd. Further, although not shown in the accompanying drawings, audio signal component Cau and video signal component (not assigned with a reference numeral) are detected from the composite video signal Cvd and subjected to a predetermined demodulation processing, thereby reproducing an audio signal Sau to be supplied to a speaker and also producing a video signal Svd, thus outputting these signals to the receiving section 4.

The A/D converter 5 detects a pedestal level generated in synchronism with a vertical blanking period from among the composite video signals Cvd generated in the receiving section 4, and A/D-converts the detection result into a level detection signal DLV(i) consisting of 8-bit binary data, and then supplies the same to the correction circuit 8. Further, the A/D converter 5 operates in synchronism with the below-mentioned synchronizing signal Vd supplied from the synchronizing signal reproducing section 7, so as to detect a pedestal level generated in synchronism with the vertical blanking period.

The correction circuit 8 operates in accordance with an instruction of the correction control signal CMP supplied from the below-mentioned continuity judging circuit 6b, so as to compulsorily set the least significant bit of the level detection signal DLV(i) to "0", or output the level detection signal DLV(i) without performing any processing.

Namely, once an instruction (correction instruction) is issued by virtue of a correction control signal CMP to compulsorily set the least significant bit of the level detection signal DLV(i) at "0", a level detection signal DLV(i) which has been compulsorily set at "0" will be outputted. On the other hand, if a correction instruction is not issued by virtue of a correction control signal CMP, the level detection signal DLV(i) will be outputted as a level detection signal DLVC(i) without performing any processing.

In the following, for the convenience of description, the level detection signal DLVC(i) outputted from the correction unit 8 will be referred to as "correction detection signal".

The antenna switchover control unit 9 includes a comparison circuit 9a and an antenna switchover circuit 9b, and operates in synchronism with a vertical synchronizing signal Vd supplied from a below-mentioned vertical synchronism reproducing circuit 7a to supply an antenna switchover control signal CHG to the antenna selecting section 3 during a period from a vertical blanking period to a next initial horizontal scanning period, thereby switching over to a diversity antenna capable of obtaining a best reception quality.

Namely, the antenna switchover circuit 9b performs a switchover control on the antenna selecting section 3 by virtue of the antenna switchover control signal CHG, so as to connect the receiving section 4 with the respective diversity antennas 2a, 2b, 2c, and 2d. In this way, level detection signals DLV(a), DLV(b), DLV(c), and DLV(d) are outputted from the level detecting unit 5, while the correction detection signals DLVC(a), DLVC(b), and DLVC(c) and DLVC(d) are outputted from the correction unit 8. Next, the comparison circuit 9a detects a maximum value among the correction detection signals DLVC(a), DLVC(b), DLVC(c) and DLVC(d), determining that a diversity antenna having the maximum value is one capable of ensuring a best reception quality. Then, judgment result JD is supplied to the antenna switchover circuit 9b and a further changeover control is performed on the antenna selecting section 3 by virtue of the antenna switchover control signal CHG, so as to connect the determined diversity antenna with the receiving section 4.

The synchronizing signal reproducing section 7 includes a vertical synchronism reproducing circuit 7a and a horizontal synchronism reproducing circuit 7b. The vertical synchronism reproducing circuit 7a detects a vertical synchronizing signal component contained in the composite synchronizing signal Csync, and generates a vertical synchronizing signal Vd which synchronizes with the detected vertical synchronizing signal component and has a predetermined vertical synchronizing frequency (the present embodiment requires a frequency of about 60Hz based on the standard of NTSC color TV system). Further, the horizontal synchronism reproducing circuit 7b detects a horizontal synchronizing signal component contained in the composite synchronizing signal Csync, and generates a horizontal synchronizing signal Hw which synchronizes with the detected horizontal synchronizing signal component and has a predetermined horizontal synchronizing frequency (the present embodiment requires a frequency of about 15.73 kHz based on the standard of NTSC color TV system).

The continuity judging unit 6 is composed of a horizontal synchronism detecting circuit 6a and a continuity judging circuit 6b. The horizontal synchronism detecting circuit 6a operates in synchronism with a horizontal synchronizing signal Hw to detect a horizontal synchronizing signal component Hin from a composite synchronizing signal Csync, and supplies the same to the continuity judging circuit 6b. The continuity judging circuit 6b checks whether the horizontal synchronizing signal component Hin has been detected and whether such a horizontal synchronizing signal component Hin has been continuously detected. If it has been detected that the horizontal synchronizing signal component Hin has been continuously detected, it will be checked whether such a continuity has occurred at a predetermined frequency, thereby judging whether a reception quality is acceptable.

Then, if the continuity judging circuit 6b has judged that the reception quality is acceptable, a correction control signal CMP not performing "correction instruction" will be outputted to the correction circuit 8. On the other hand, if it is judged that the reception quality is not acceptable, a correction control signal CMP indicating "correction instruction" will be outputted to the correction circuit 8.

Namely, the continuity judging circuit 6b performs the same processing as the continuity judging unit 6 in the embodiment shown in Fig. 1. If it is judged that "the conditions in horizontal scanning periods" and "the conditions in vertical scanning periods" have been satisfied, it will be judged that a reception being performed at this time is not under a low electric field. If even one of the above two conditions has not been satisfied, it will be judged that a reception being performed at this time is under a low electric field, thereby outputting correction control signals CMP in response to various judgment results.

Furthermore, during the vertical blanking periods the continuity judging circuit 6b finishes judging whether "the conditions in vertical scanning periods" have been satisfied. During the next 1V period Tv, a correction control signal CMP indicating "correction instruction" or a correction control signal CMP not performing "correction instruction" will be outputted in response to judgment result.

Next, description will be given to explain an operation of the radio receiving set 1 having the above-described composition, with reference to Fig. 4. Fig. 4(a) is a timing chart mainly showing an example of an operation when the continuity judging circuit 6b judges whether "the conditions in horizontal scanning periods" have been satisfied. Fig. 4(b) is a timing chart mainly showing an example of an operation when the continuity judging circuit 6b judges whether "the conditions in vertical scanning periods" have been satisfied.

As shown in Fig. 4(a), when the receiving section 4 continuingly receives a reception signal Sin outputted from any one of the diversity antennas, the horizontal synchronism detecting circuit 6a will operate in synchronism with the horizontal synchronizing signal Hw produced in each 1H period Th, to perform a processing for detecting a horizontal synchronizing signal component Hin from a composite synchronizing signal Csync, while the continuity judging circuit 6b investigates a "coincidence" on the time axis between a horizontal synchronizing signal component Hin and a horizontal synchronizing signal Hw. If no horizontal synchronizing signal component Hin is detected, the continuity judging circuit 6b will judge that there is no "coincidence". On the other hand, when a horizontal synchronizing signal component Hin and a horizontal synchronizing signal Hw have occurred simultaneously, the continuity judging circuit 6b will judge that there is such a "coincidence".

Furthermore, each time a state having the foregoing "coincidence" has continuously occurred for number of times n (3 times), the continuity judging circuit 6b will judge that the horizontal synchronizing signal component Hin has been detected appropriately and the "coincidence" has been existing, thereby internally generating a square wave-shaped continuity detection signal Ed which becomes logical "H", and counting the number of occurrences n of the continuity detection signal Ed generated in 1H period Th, during each IV period Tv prescribed by the vertical synchronizing signal Vd. Then, as shown in Fig. 4(b), if the number of times have reached or exceeded a predetermined number of times u (63 times) within 1V period Tv, it will be judged that "frequency of continuity" is high, and a square wave-shaped stability detection signal Eus will be generated which becomes logical "H" and indicates that "the conditions in horizontal scanning periods" have been satisfied. On the other hand, if the number of times have not reached a predetermined number of times u within 1V period Tv, it will be judged that "frequency of continuity" is low and that "the conditions in horizontal scanning periods" have not been satisfied.

In addition, the continuity judging circuit 6b operates to count a stability detection signal Eus generated during the foregoing 1V period Tv so as to judge whether the stability detection signal Eus has continuously occurred for the number of times k (3 times). If the number of times k has been in a continuous state, it will be judged that "the conditions in vertical scanning periods" have been satisfied and an electric filed at this time is not a weak electric field, thereby outputting a correction control signal CMP which becomes logical "H" and does not indicate "correction instruction". On the other hand, when the number of times of continuation of the stability detection signal Eus is less than k times, it will be judged that "conditions in vertical scanning periods" have not been satisfied, and an electric filed at this time is a weak electric field, thereby outputting a correction control signal CMP which becomes logical "L" and indicates "correction instruction".

In parallel to a process in which a correction control signal CMP is outputted from the continuity judging circuit 6b, the antenna switchover circuit 9b will operate within a predetermined period τ at each timing SLCT in synchronism with each 1V period Tv, to connect the respective diversity antennas 2a - 2b with the receiving section 4, so that the correction circuit 8 can input into it level detection signals DLV(a) - DLV(d) through A/D converter 5.

Then, when a correction control signal CMP indicating a purport of not performing "correction instruction" and becoming logical "H" is outputted from the continuity judging circuit 6b, the correction circuit 8 will supply the level detection signals DLV(a) - DLV(d) as correction detection signals DLVC(a) - DLVC(d) to the comparator 9a without performing any processing. On the other hand, when a correction control signal CMP indicating a purport of performing "correction instruction" and becoming logical "L" is outputted from the continuity judging circuit 6b, the correction circuit 8 will perform a correction processing which changes the least significant bits of level detection signals DLV(a)- DLV(d) into "0". Then, the changed correction detection signals, which in other words can be referred to as correction detection signals DLVC(a) - DLVC(d) free from any instability, are supplied to the comparator 9a.

Subsequently, once the comparator 9a receives the correction detection signals DLVC(a)- DLVC(d) in the form of the level detection signals DLV(a)- DLV(d), a correction detection signal will be detected which will have a maximum value among the correction detection signals DLVC(a) - DLVC(d), while the antenna selecting section 3 will be controlled through the antenna switchover circuit 9b so as to select a diversity antenna equivalent to the detected correction detection signal.

On the other hand, once the comparator 9a receives the correction detection signals DLVC(a) - DLVC(d) having the least significant bits changed to "0", a correction detection signal will be detected which will have a maximum value among the correction detection signals DLVC(a) - DLVC(d), while the antenna selecting section 3 will be controlled through the antenna switchover circuit 9b so as to select a diversity antenna equivalent to the detected correction detection signal.

Therefore, when a reception quality is not acceptable like a condition in which the receiving section 4 is receiving signal under a low electric field, although the level detection signals DLV(a)- DLV(d) will be unstable, it is still possible for the comparison circuit 9a to operate in accordance with correction detection signals DLVC(a)- DLVC(d) having their least significant bits changed into "0" and free from any instability, so as to detect a diversity antenna capable of obtaining the best reception quality.

As described above, according to the radio receiving set 1 of the present embodiment, the continuity judging circuit 6b investigates whether "the conditions in horizontal scanning periods" and "the conditions in vertical scanning periods" have been satisfied with respect to the horizontal synchronizing signal component Hin of the composite synchronizing signal Csync, so as to judge whether the horizontal synchronizing signal component Hin has been timely continuously demodulated. If it has been judged that the horizontal synchronizing signal component Hin has been continuously demodulated, a reception quality at this time can be judged to be acceptable. Therefore, unlike a process which judges whether a reception is being performed under a low electric field simply by investigating the level of a horizontal synchronizing signal component, it is possible to judge whether it is a weak electric field with an improved precision.

Further, the continuity judging circuit 6b supplies a correction control signal CMP responding to a quality judging result of reception quality to the correction circuit 8. When a reception quality is acceptable, the correction circuit 8 will supply the level detection signals DLV(a), DLV(b), DLV(c), and DLV(d) supplied from the A/D converter 5 to the comparison circuit 9a, as correction detection signals DLVC(a), DLVC(b), DLVC(c), and DLVC(d) without being processed to any extent. On the other hand, when a reception quality is not acceptable like a process in which a broadcast wave is being received under a low electric field, the correction circuit 8 will compulsorily make the least significant bits of the level detection signals DLV(a), DLV(b), DLV(c), and DLV(d) into "0", and supply the correction detection signals DLVC(a), DLVC(b), and DLVC(c) and DLVC (d) to the comparison circuit 9a, thereby carrying out a control for effecting a switchover among the diversity antennas 2a - 2d.

Usually, when a reception quality is not acceptable, since the level detection signals DLV(a), DLV(b), DLV(c), and DLV(d) are such that their least significant bits have unstable values and thus not reliable, even if the comparison circuit 9a performs a comparison among the level detection signals DLV(a), DLV(b), DLV(c), and DLV(d), it is still impossible to perform a highly accurate selection by selecting a diversity antenna corresponding to a level detection signal having a maximum value. Different from such a conventional process, in the present embodiment, the correction detection signals DLVC(a), DLVC(b), DLVC (c) and DLVC(d), which have become free from any instability by compulsorily changing into "0" the least significant bits which are unstable and unreliable, are supplied to the comparison circuit 9a, while the comparison circuit 9a itself performs a comparison among these correction detection signals DLVC(a), DLVC(b), DLVC (c) and DLVC(d), so as to select a diversity antenna corresponding to a correction detection signal having the maximum level,
thereby making it possible to select a diversity antenna having a best reception quality with an acceptable precision and a high stability.

### Example 2

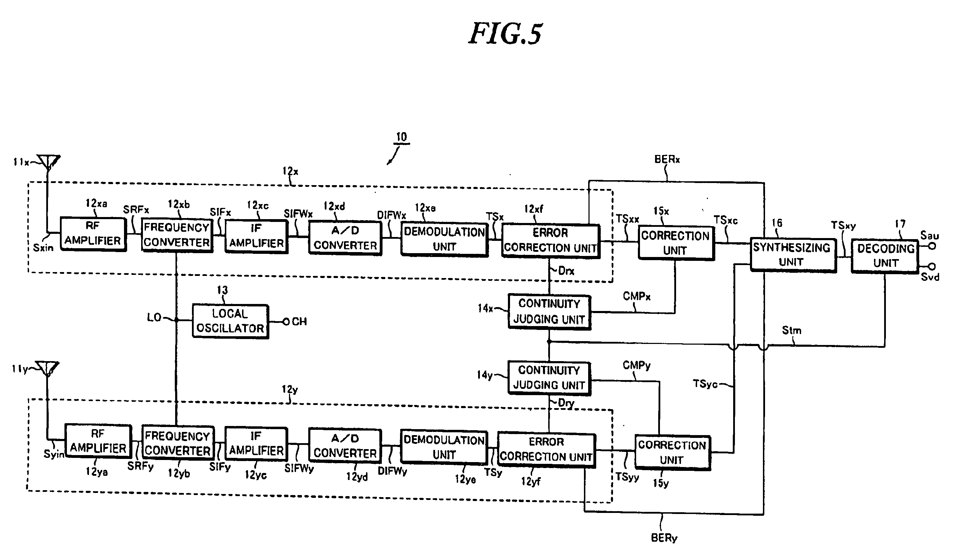

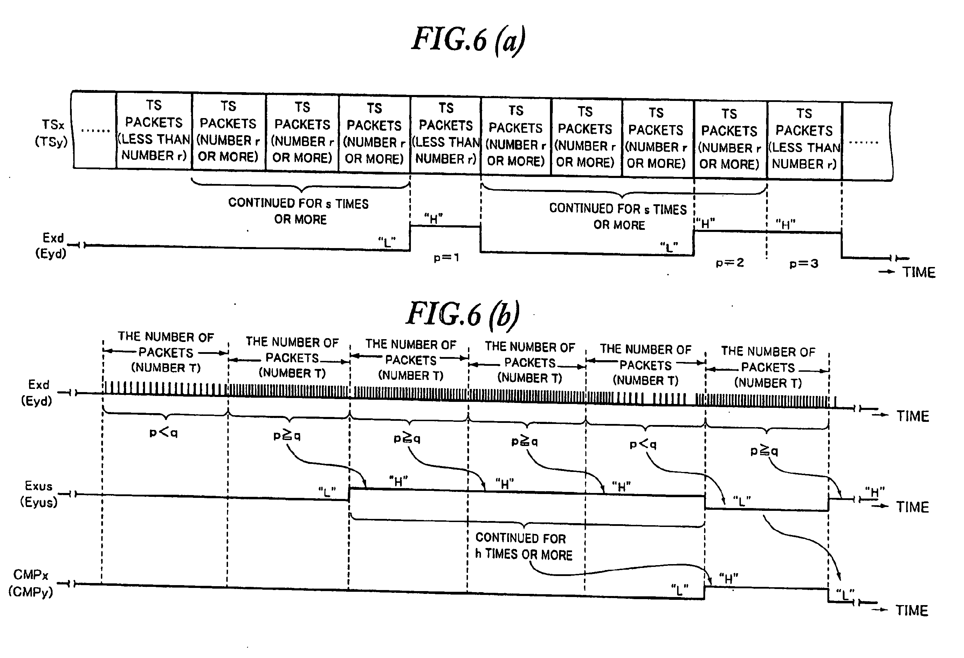

Next, with reference to Figs. 5 and 6, description will be given to explain a radio receiving set according to a more detailed example based on the example shown in Fig. 2(a). In detail, Fig. 5 is a block diagram showing the composition of the radio receiving set of the preset example with the elements which are the same as or equivalent to those of Fig. 2(a) being represented by the same reference numerals. Fig. 6 is a timing chart explaining an operation of the radio receiving set of the present example.

As shown in Fig. 5, the radio receiving set 10 is similar to the radio receiving set shown in Fig. 2(a), comprising: two systems of receiving sections 12x and 12y connected with two diversity antennas I 1 x and 11y; a local oscillator 13 which supplies the same local oscillation signals LO to the receiving sections 12x and 12y; continuity judging units 14x and 14y; correction units 15x and 15y; a synthesizing unit 16; a decoding unit 17. The local oscillator 13 generates a local oscillation signal LO having a tuned frequency corresponding to a broadcast channel CH directed by a user, and supplies the same to the receiving sections 12x and 12y.

The receiving section 12x comprises: an RF amplifier 12xa which amplifies a high frequency reception signal Sxin generated in the diversity antenna 11x and outputs an RF signal SRFx; a frequency converter 12xb which mixes together the RF signal SRFx and the local oscillation signal LO to generate and thus output an intermediate frequency signal (IF signal) SIFx; an IF-amplifier 12xc which amplifies the IF-signal SIFx and band-limits the same to a predetermined frequency band so as to output the so-called IF signal SIFWx serving as a desired wave; an A/D converter 12xd which A/D-converts the IF-signal SIFWx into IF signal DIFWx consisting of digital data; a demodulator 12xe which applies various processings such as tuning, FFt and demodulation to IF-signal DIFWx to generate the transport stream TSx shown in Fig. 2(b); an error correction unit 12xf which performs an error correction based on Viterbi decoding and Reed Solomon decoding, to process TS payload (in more detail, elementary stream) of each TS packet of the transport stream TSx, thereby outputting error-corrected transport stream TSxx.

Furthermore, the error correction unit 12xf, when performing an error correction, outputs the correction number data Drx indicating the number of corrected bytes with respect to video data and audio data forming the elementary stream.

The receiving section 12y has the same composition as the receiving section 12x, comprising: an RF amplifier 12ya which amplifies a high frequency reception signal Syin generated in the diversity antenna 11y and outputs an RF signal SRFy; a frequency converter 12yb which mixes together the RF signal SRFy and the local oscillation signal LO to generate and thus output an intermediate frequency signal (IF signal) SIFy; an IF-amplifier 12yc which amplifies the IF-signal SIFy and band-limits the same to a predetermined frequency band so as to output the so-called IF signal SIFWy serving as a desired wave; an A/D converter 12yd which A/D-converts the IF-signal SIFWy into IF signal DIFWy consisting of digital data; a demodulator 12ye which applies various processings such as tuning, FFt and demodulation to IF-signal DIFWy to generate the transport stream TSy shown in Fig. 2(b); an error correction unit 12yf which performs an error correction based on Viterbi decoding and Reed Solomon decoding, to process TS payload of each TS packet of the transport stream TSy, thereby outputting error-corrected transport stream TSyy.

Furthermore, the error correction unit 12yf, when performing an error correction, outputs the correction number data Dry indicating the number of corrected bytes with respect to video data and audio data forming the elementary stream.

Besides, the continuity judging units 14x and 14y, the correction units 15x and 15y, the synthesizing unit 16, and the decoding unit 17 have the same composition as the radio receiving set shown in Fig. 2(a).

Next, description will be given to explain an operation of the radio receiving set 10 of the present example having the above-described composition, with reference to Fig. 6. Fig. 6(a) is a timing chart showing an example of an operation when the continuity judging units 14x and 14y generate the error detection signals Exd and Eyd. Fig. 6(b) is another timing chart showing an example of an operation when the continuity judging units 14x and 14y generate the correction control signals CMPx and CMPy. However, for the purpose of an easy description, the operations of the continuity judging units 14x and 14y will be shown in the same timing chart.

As shown in Fig. 6(a), the continuity judging units 14x(14y) receive the correction number data Drx(Dry) outputted from the error correction units 12xf(12xf). When the correction number data Drx(Dry) outputted in TS packet units indicate that a predetermined number of bytes r (5 bytes) have been corrected, and detects that a predetermined number s of TS packets (three) have been in a continuous state, the error detection signals Exd(Eyd) will be internally generated. During a period of receiving the correction number data Drx(Dry) with respect to a predetermined number T of TS packets (256) in a continuous state, the number of occurrences p of the error detection signals Exd(Eyd) are counted. When the number of occurrences p becomes equal to or more than a predetermined number of times q (31 times), an instability detection signal Exus(Eyus) will be internally generated. Further, when the instability detection signals Exus(Eyus) have been continuously generated for a predetermined number of times (3 times), the correction control signals CMPx(CMPy) indicating "correction instruction" will be supplied to the correction units 15x (15y) during a next period including T number of TS packets.

Namely, when the receiving sections 12x(12y) performs an error correction processing of predetermined number of bytes r with respect to each respective TS packets and when such a correction processing has been continuously performed for s number of times, the continuity judging units 14x(14y) will generate the error detection signals Exd(Eyd). Further, during a period in which the receiving units 12x(12y) performs an error correction processing with respect to a predetermined number of continuously connected TS packets, the continuity judging units 14x(14y) will count the number of occurrences p of the error detection signals Exd(Eyd). When the number of occurrences p has become equal to or more than a predetermined number of times q, instability detection signals Exus(Eyus) will be generated. Moreover, when the instability detection signals Exus(Eyus) have been continuously generated for a predetermined number of times (3 times), the continuity judging units 14x(14y) will output the correction control signals CMPx(CMPy) indicating "correction instruction" to the correction units 15x (15y) during a next period including T number of TS packets.

The continuity judging units 14x(14y) investigates the number of corrections Drx (Dry) so as to judge, within the error-corrected TS packets, the number of bytes, a continuity of the error-corrected TS packets, an occurrence frequency of the continuity within a period involving a predetermined number of TS packets. When a state in which the occurrence frequency is high has continuously occurred for a predetermined number of times h, it will be judged that a reception at this time is performed under a low electric field. On the other hand, when a state in which the occurrence frequency is high has not reached a predetermined number of times h, the continuity judging units 14x(14y) will output the correction control signals CMPx(CMPy) which do not perform "correction instruction".

The correction unit 15x operates during a period of supplying a correction control signal CMPx indicating "correction instruction", to perform a correction processing which compulsorily changes the data of a least significant bit into "0", with respect to TS payload in TS packet outputted from the receiving unit 12x. On the other hand, during a period of supplying a correction control signal CMPx which does not perform "correction instruction", the correction unit 15x will not perform a correction processing which compulsorily changes the data of a least significant bit into "0", with respect to TS payload in TS packet outputted from the receiving unit 12x, and thus output the data without performing any processing.

Therefore, the correction unit 15x will operate in accordance with the instruction of the correction control signal CMPx, to output a transport stream TSxc consisting of a period involving only corrected TS packets and a period involving only TS packets not performing correction processing.

Similarly, the correction unit 15y operates during a period of supplying a correction control signal CMPy indicating "correction instruction", to perform a correction processing which compulsorily changes the data of a least significant bit into "0", with respect to TS payload in TS packet outputted from the receiving unit 12y. On the other hand, during a period of supplying a correction control signal CMPy which does not perform "correction instruction", the correction unit 15y will not perform a correction processing which compulsorily changes the data of a least significant bit into "0", with respect to TS payload in TS packet outputted from the receiving unit 12y, and thus output the data without performing any processing.

Then, the synthesizing unit 16 receives the transport streams TSxc and TSyc, data BERx indicating an error rate outputted when the receiving section 12x performs the above-mentioned error correction, and data BERy indicating an error rate outputted when the receiving section 12y performs the above-mentioned error correction. When the data BERx indicates an acceptable reception quality, TS packets of the transport stream TSxc are outputted. On the other hand, when the data BERy indicates an acceptable reception quality, TS packets of the transport stream TSyc are outputted.

That is, the synthesizing unit 16 operates in accordance with the Data BERx and the data BERy to effect a switchover among the respective TS packets of the transport streams TSxc and TSyc, thereby generating and thus outputting a transport stream TSxy capable of obtaining a better reception quality.

Then, the decoding unit 17 receives the transport stream TSxy and performs a decoding processing in accordance with a predetermined audio coding method (MPEG-2 Audio) and a predetermined video coding method (MPEG-2 Video), thereby reproducing and thus outputting audio signal Sau and video signal Svd transmitted from a broadcast station.

Furthermore, in order to set the basic clock of the radio receiving set 10 with a broadcast station, the decoding unit 17 will detect clock information data called PCR which will be contained in the transport stream TSxy and transmitted hereto, generates a timing signal Stm consistent with the clock information data and supplies the same to the continuity judging units 14x and 14y. In this way, the continuity judging units 14x and 14y can, in synchronism with the timing signal Stm, receive the data Drx and the data Dry indicating the number of corrections effected in each respective TS packets.

According to the radio receiving set 10 of the present example described above, the continuity judging units 14x(14y) investigates the correction number data Drx, Dry so as to judge, within the error-corrected TS packets, the number of bytes, a continuity of the error-corrected TS packets, an occurrence frequency of the continuity within a period involving a predetermined number of TS packets. When a state in which the occurrence frequency is high has continuously occurred for a predetermined number of times h, it will be judged that a reception at this time is performed under a low electric field. Therefore, unlike a process of judging whether a reception is performed under a low electric field only by investigating the level of IF signal or the like generated in the receiving sections 12x and 12y, it is possible to detect, with a further higher precision, whether a reception is performed under a low electric field.

Upon judging that a reception is being performed under a low electric field, the continuity judging units 14x and 14y will output the correction control signals CMPx and CMPy indicating "correction instruction", while the correction units 15x and 15y will operate in accordance with the correction control signals CMPx and CMPy to apply a correction processing to the transport streams TSxx and TSyy. Therefore, when a reception is performed under a low electric field, it is possible to compulsorily change the least significant bits of unstable video data and audio data into "0", thereby outputting transport streams TSxc and TSyc free from any instability to the synthesizing unit 16. Further, it is possible to allow the decoding unit 17 to decode, in accordance with an error rate, TS packet having a better reception quality from among the transport streams TSxc and TSyc free from any instability. In this way, even when a reception is performed under a low electric field, it is still possible to reproduce an audio signal Sau and a video signal Svd with a further higher quality, in accordance with a broadcast wave received by a diversity antenna capable of obtaining a better reception quality, selected from among the diversity antennas 11x and 11y.

## Claims

1. A radio receiving set (1) for selecting one of a plurality of antennas (2a-2d) to receive an analogue television broadcast,
the radio receiving set comprising:
- antenna selection means (3) for selecting one of the plurality of the antennas (2a-2d);
- receiving means (4) for reproducing a composite video signal (Cvd) and a composite synchronizing signal (Csync) from a reception signal output from a selected antenna;
- a level detection unit (5) for detecting the level of each composite video signal (Cvd) reproduced by the receiving means (4) when the plurality of antennas (2a-2d) are respectively selected by the antenna selection means (3) at predetermined timings, and outputting respective level detection signals (DLV(i)); and
- an antenna switchover control unit (9);
**characterized by**
continuity judging means (6) which operates to investigate
- whether the foregoing detection processing is capable of detecting a horizontal synchronizing signal component of the composite synchronizing signal (Csync),
- whether a continuous detection of the horizontal synchronizing signal component was possible, and
- whether the continuity has occurred at a predetermined frequency when the continuous detection was possible
and which, upon judging that the composite synchronizing signal (Csync) is not being continuously reproduced at a high frequency, generates a
correction control signal (CMP) indicating a correction instruction, and which, upon judging that the composite synchronizing signal (Csync) is being continuously reproduced at a high frequency, generates a correction control signal (CMP) not performing a correction instruction; and
correction means (8) which, when a correction control signal (CMP) indicating that a correction instruction has been generated from the continuity judging means (6), performs a correction processing to compulsorily change at least the least significant bit in each of the level detection signals (DLV(i)) to be changed in accordance with predetermined binary data, thereby generating respective correction detection signals (DLVC(i)) free from instability; and
wherein the antenna switchover control means (9) perform a comparison among the respective correction detection signals (DLVC(i)), judges one of the plurality of the antennas (2a-2d) corresponding to a maximum correction detection signal (DLVC(i)), and controls the antenna selection means (3) to select a judged antenna.

2. The radio receiving set according to claim 1,
wherein the continuity judging means (6),
upon detecting that a horizontal synchronizing signal component of the composite synchronizing signal (Csync) has been continuously reproduced for a first number of times in synchronism with horizontal blanking periods, judges that there is continuity,
upon detecting that continuity has occurred for a number of times equal to or more than a second number of times during one vertical scanning period, judges that a frequency of continuity is high,
upon detecting that a state in which the frequency of continuity is high has continuously occurred for a third number of times, judges that the composite synchronizing signal (Csync) has been continuously reproduced at a high frequency and generates a correction control signal (CMP) not performing a correction instruction, and
upon detecting that a state in which the frequency of continuity is high has not continuously occurred for the third number of times, judges that the composite synchronizing signal (Csync) has not been continuously reproduced at a high frequency and generates a correction control signal (CMP) indicating a correction instruction.

## Patentansprüche

1. Funkempfangsgerät (1) zum Auswählen von einer aus einer Vielzahl von Antennen (2a - 2d) zum Empfangen einer analogen Fernsehübertragung, wobei das Funkempfangsgerät folgendes aufweist:
- eine Antennenwähleinrichtung (3) zum Auswählen von einer aus der Vielzahl von Antennen (2a - 2d);
- eine Empfangseinrichtung (4) zum Reproduzieren eines zusammengesetzten Videosignals (Cvd) und eines zusammengesetzten Synchronisierungssignals (Csync) aus einem von einer ausgewählten Antenne abgegebenen Empfangssignal;
- eine Pegelerfassungseinheit (5) zum Detektieren des Pegels von jedem zusammengesetzten Videosignal (Cvd), das von der Empfangseinrichtung (4) reproduziert wird, wenn die Vielzahl von Antennen (2a - 2d) von der Antennenwähleinrichtung (3) jeweils zu vorbestimmten Zeitpunkten ausgewählt wird, und zum Abgegeben von jeweiligen Pegelerfassungssignalen (DLV(i)); und
- eine Antennenumschalt-Steuereinheit (9);
**gekennzeichnet durch**:
eine Kontinuitäts-Beurteilungseinrichtung (6), die betriebsmäßig ausgebildet ist, um folgendes zu untersuchen:
- ob die vorgenannte Erfassungsverarbeitung eine Horizontal-Synchronisierungssignalkomponente des zusammengesetzten Synchronisierungssignals (Csynch) erfassen kann,
- ob eine kontinuierliche Erfassung der Horizontal-Synchronisierungssignalkomponente möglich war, und
- ob die Kontinuität mit einer vorbestimmten Häufigkeit aufgetreten ist, wenn die kontinuierliche Erfassung möglich war,
und die bei der Beurteilung, daß das zusammengesetzte Synchronisierungssignal (Csync) nicht kontinuierlich mit einer hohen Häufigkeit reproduziert wird, ein Korrektur-Steuersignal (CMP) erzeugt, das eine Korrekturanweisung anzeigt, und die bei der Beurteilung, daß das zusammengesetzte Synchronisierungssignal (Csync) kontinuierlich mit einer hohen Häufigkeit reproduziert wird, ein Korrektur-Steuersignal (CMP) erzeugt, bei dem keine Korrekturanweisung ausgeführt wird;
und **durch**
- eine Korrektureinrichtung (8), die dann, wenn von der Kontinuitäts-Beurteilungseinrichtung (6) ein Korrektursteuersignal (CMP) erzeugt worden ist, das eine Korrekturanweisung anzeigt, eine Korrekturverarbeitung ausführt, um zumindest das niederwertigste Bit in jedem der Pegelerfassungssignale (DLV(i)) in Abhängigkeit von vorbestimmten Binärdaten zwangsweise zu ändern und **dadurch** jeweilige Korrektur-Erfassungssignale (DLVC(i)) zu erzeugen, die frei von Instabilität sind; und
wobei die Antennenumschalt-Steuereinrichtung (9) einen Vergleich unter den jeweiligen Korrektur-Erfassungssignalen (DLVC(i)) ausführt, eine aus der Vielzahl der Antennen (2a - 2d) beurteilt, die einem maximalen Korrektur-Erfassungssignal (DLVC(i)) entspricht und die Antennenwähleinrichtung (3) zum Auswählen einer beurteilten Antenne steuert.

2. Funkempfangsgerät nach Anspruch 1,
wobei die Kontinuitäts-Beurteilungseinrichtung (6)
bei der Feststellung, daß eine Horizontal-Synchronisierungssignalkomponente des zusammengesetzten Synchronisierungssignals (Csync) für eine erste Anzahl von Malen synchron mit horizontalen Austastperioden kontinuierlich reproduziert worden ist, das Urteil trifft, daß Kontinuität vorliegt,
bei der Feststellung, daß Kontinuität für eine Anzahl von Malen aufgetreten ist, die gleich einer oder größer als eine zweite Anzahl von Malen während einer vertikalen Abtastperiode ist, das Urteil trifft, daß eine Häufigkeit der Kontinuität hoch ist,
bei der Feststellung, daß ein Zustand, in dem die Häufigkeit der Kontinuität hoch ist, für eine dritte Anzahl von Malen kontinuierlich aufgetreten ist, das Urteil trifft, daß das zusammengesetzte Synchronisierungssignal (Csync) kontinuierlich mit einer hohen Häufigkeit reproduziert worden ist, und ein Korrektur-Steuersignal (CMP) erzeugt, bei dem keine Korrekturanweisung ausgeführt wird, und
bei der Feststellung, daß ein Zustand, in dem die Häufigkeit der Kontinuität hoch ist, für die dritte Anzahl von Malen nicht kontinuierlich aufgetreten ist, das Urteil trifft, daß das zusammengesetzte Synchronisierungssignal (Csync) nicht kontinuierlich mit einer hohen Häufigkeit reproduziert worden ist, und ein Korrektur-Steuersignal (CMP) erzeugt, bei dem eine Korrekturanweisung ausgeführt wird.

## Revendications

1. Appareil de réception radio (1) pour sélectionner une antenne parmi une pluralité d'antennes (2a-2d) pour recevoir une émission de télévision analogique,
l'appareil de réception radio comprenant:
- des moyens de sélection d'antenne (3) pour sélectionner une antenne parmi la pluralité des antennes (2a-2d);
- des moyens de réception (4) pour reproduire un signal vidéo composite (Cvd) et un signal de synchronisation composite (Csync) provenant d'une sortie de signal de réception issue d'une antenne sélectionnée;
- une unité de détection de niveau (5) pour détecter le niveau de chaque signal vidéo composite (Cvd) reproduit par les moyens de réception (4) lorsque la pluralité d'antennes (2a-2d) est respectivement sélectionnée par les moyens de sélection d'antenne (3) à synchronisations prédéterminées, et délivrer des signaux de détection de niveau respectifs (DVL(i)); et
- une unité de commande de commutation d'antenne (9);
**caractérisé par** des moyens de jugement de continuité (6) qui opèrent pour rechercher
- si le traitements de détection précité est à même de détecter une composante de signal de synchronisation horizontale du signal de synchronisation composite (Csync),
- si une détection continue de la composante de signal de synchronisation horizontale a été possible, et
- si la continuité s'est produite à une fréquence prédéterminée lorsque la détection continue a été possible,
qui, lorsqu'ils jugent que le signal de synchronisation composite (Csync) n'est pas reproduit en continu à une fréquence élevée, génèrent un signal de commande de correction (CMP) indiquant une instruction de correction, et
qui, lorsqu'ils jugent que le signal de synchronisation composite (Csync) est reproduit en continu à une fréquence élevée, génèrent un signal de commande de correction (CMP) n'effectuant pas une instruction de correction; et
des moyens de correction (8) qui, lorsqu'un signal de commande de correction (CMP) indiquant qu'une instruction de correction a été généré par les moyens de jugement de continuité (6), effectuent une traitement de correction pour changer obligatoirement au moins le bit le moins significatif dans chacun des signaux de détection de niveau (DLV(i)) selon des données binaires prédéterminées, générant de la sorte des signaux de détection de correction respectifs (DLV(i)) dépourvus d'instabilité; et dans lequel les moyens de commande de commutation d'antenne (9) effectuent une comparaison parmi les signaux de détection de correction respectifs (DLV(i)), jugent une antenne parmi la pluralité des antennes (2a-2d) correspondant à un signal de détection de correction maximal (DLV(i)) et commandent les moyens de sélection d'antenne (3) pour sélectionner une antenne jugée.

2. Appareil de réception radio selon la revendication 1,
dans lequel les moyens de jugement de continuité (6)
- jugent, lorsqu'ils détectent qu'une composante de signal de synchronisation horizontale du signal de synchronisation composite (Csync) a été reproduite en continu pendant un premier nombre de fois en synchronisme avec des périodes de suppression horizontale, qu'il y a continuité,
- jugent, lorsqu'ils détectent qu'une continuité s'est produite pendant un nombre de fois égal ou supérieur à un deuxième nombre de fois au cours d'une période de balayage vertical, qu'une fréquence de continuité est élevée,
- jugent, lorsqu'ils détectent qu'un état dans lequel la fréquence de continuité est élevée s'est produit en continu pendant un troisième nombre de fois, que le signal de synchronisation composite (Csync) a été reproduit en continu à une fréquence élevée et génèrent un signal de commande de correction (CMP) n'effectuant pas une instruction de correction, et
- jugent, lorsqu'ils détectent qu'un état dans lequel la fréquence de continuité est élevée ne s'est pas produit en continu pendant le troisième nombre de fois, que le signal de synchronisation composite (Csync) n'a pas été reproduit en continu à une fréquence élevée et génèrent un signal de commande de correction (CMP) indiquant une instruction de correction.
